# FASCICULE DE BREVET EUROPEEN

(11) **EP 4 426 571 B1**
(45) Date de publication et mention de la délivrance du brevet: **21.01.2026**
(21) Numéro de dépôt: 21805476.5
(22) Date de dépôt: 02.11.2021
(51) Int. Cl.: B60J 1/17, B60J 1/18

(54) **DISPOSITIF VITRÉ POUR PORTE DE VÉHICULE À PANNEAU MOBILE AFFLEURANT ET PORTE CORRESPONDANTE**
GLASVORRICHTUNG FÜR EINE FAHRZEUGTÜR MIT EINER BÜNDIG MONTIERTEN BEWEGLICHEN PLATTE UND ENTSPRECHENDE TÜR
GLAZED DEVICE FOR A VEHICLE DOOR, COMPRISING A FLUSH-FITTED MOVABLE PANEL, AND CORRESPONDING DOOR

(43) Date de publication de la demande: 11.09.2024
(73) Titulaire: Advanced Comfort Systems France SAS - ACS France, 79302 Bressuire (FR)
(72) Inventeur: CHARGE, Philippe, 79300 BRESSUIRE (FR); DESBOIS, Mickaël, 44115 HAUTE GOULAINE (FR); SEYNAT, Cédric, 79300 BRESSUIRE (FR)
(74) Mandataire: Vidon Brevets & Stratégie
(86) Numéro de dépôt international: PCT/EP2021/080385
(87) Numéro de publication internationale: WO 2023/078533

(56) Documents cités:
- WO-A1-2007/071629
- FR-A- 1 263 183
- US-A1- 2008 216 410

## Description

### 1. Domaine de l'invention

Le domaine de l'invention est celui des véhicules automobiles.

Plus précisément, l'invention concerne l'équipement des baies ménagées dans les véhicules, et notamment les portes de véhicule.

En particulier, l'invention concerne les portes de véhicule équipées d'au moins un panneau vitré mobile sensiblement verticalement, notamment pour passer d'une position fermée à une position ouverte dans laquelle il pénètre intégralement ou partiellement dans un caisson inférieur de carrosserie (le panneau mobile pouvant, bien sûr, prendre généralement, une pluralité de positions intermédiaires).

Une telle porte de véhicule peut notamment être une porte latérale, mais l'invention peut également s'appliquer, par exemple, aux portes battantes et/ou coulissantes d'un véhicule, y compris les portes arrière, les hayons... voire une partie fixe de la carrosserie d'un véhicule.

### 2. Art antérieur

Des exemples de tels dispositifs sont décrits notamment dans les documents de brevet EP1422091, EP1612072 ou EP3647093.

Selon cette approche, un cadre est prévu, du côté orienté vers l'intérieur du véhicule, portant un ou plusieurs (classiquement deux) rails, coopérant avec des patins solidaires du panneau vitré mobile, et fixés sur la face de celui-ci orientée vers l'intérieur du véhicule. Le cadre peut, le cas échéant, être tronqué et être limité à des montants portant les rails.

Cette technique est intéressante, car elle permet de concevoir des designs originaux, du fait de la suppression du cadre de porte classique, tout en conservant un guidage et un maintien efficaces du panneau mobile.

On connaît également des dispositifs comprenant une partie fixe vitrée, dans laquelle est ménagée une ouverture, qui peut être libérée ou obturée par un panneau mobile guidé le long de rails montés sur la face de la partie fixe vitrée orientée vers l'intérieur du véhicule. Le demandeur a déposé de nombreux brevets sur cette approche, dont le principe général de cette technique est notamment décrit dans les documents de brevet EP778168 et EP857844. Dans ce cas, le panneau mobile est généralement mobile selon un axe horizontal et avec un mouvement complexe, dit de louvoiement.

Il serait intéressant, dans certaines situations, de combiner les deux approches, à savoir la présence d'une partie fixe vitrée et d'un panneau mobile verticalement pour s'escamoter au moins en partie dans un caisson de porte, et venant obturer une ouverture dont trois côtés, deux bords latéraux et un bord supérieur, sont définis dans la partie fixe. Cette combinaison n'est cependant ni aisée ni directe. La mise en place d'une ouverture sur le bord inférieur du panneau vitré fixe nécessite une approche spécifique du maintien et du déplacement du panneau mobile. Il est essentiel de maximiser le clair de baie, et donc de réduire autant que faire se peut l'encombrement des éléments rapportés sur la partie fixe (rails, cadre...), tout en assurant efficacement et de façon fiable et durable le guidage du panneau mobile, l'étanchéité (y compris en présence d'un jet haute pression), la sécurité...

Le document US 2008/216410 A1 décrit un dispositif vitré comprenant une partie fixe vitrée et un panneau vitré mobile en coulissement par rapport à ladite partie fixe selon un axe sensiblement vertical, pouvant sélectivement obturer ou libérer, au moins partiellement, une ouverture ménagée dans ladite partie fixe.

Un autre aspect important est la simplicité d'assemblage et de montage du dispositif, et notamment du panneau mobile, lorsque la partie fixe est solidarisée au caisson de porte, que ce soit lors de la première installation ou pour une opération de maintenance.

### 3. Objectifs de l'invention

L'invention a notamment pour objectif de pallier ces inconvénients de l'art antérieur.

Plus précisément, l'invention a pour objectif, dans au moins un mode de réalisation, de fournir un dispositif vitré pour la réalisation d'une porte de véhicule, qui soit simple à mettre en œuvre et à assembler, par exemple sur une chaîne de montage.

Un autre objectif de l'invention, selon au moins un mode de réalisation, est de fournir un tel dispositif vitré, qui puisse être aisément maintenu lors de son montage ou d'un remplacement du panneau mobile, par exemple suite à un accident.

### 4. Exposé de l'invention

Ces objectifs, ainsi que d'autres qui apparaîtront par la suite sont atteints à l'aide d'un dispositif vitré destiné à être assemblé à un caisson de porte pour former une porte de véhicule ou à un élément de carrosserie, comprenant une partie fixe vitrée et un panneau vitré mobile en coulissement par rapport à ladite partie fixe selon un axe sensiblement vertical, pouvant sélectivement obturer ou libérer, au moins partiellement, une ouverture ménagée dans ladite partie fixe, ledit panneau mobile étant guidé le long de rails portés par ladite partie fixe.

Selon l'invention, ledit panneau mobile porte un surmoulage obtenu par encapsulation, recouvrant le chant dudit panneau mobile et s'étendant sur au moins un bord de la surface dudit panneau mobile orientée vers l'intérieur dudit véhicule, et dont une portion inférieure s'étend sur le bord inférieur dudit panneau mobile et présente au moins une butée apte à coopérer avec un cadre, une traverse centrale et/ou une pièce rapportée sur un rail de guidage porté par ladite partie fixe, la ou lesdites butées assurant une limitation du déplacement dudit panneau mobile par rapport à ladite partie fixe selon deux directions sensiblement perpendiculaires audit axe sensiblement vertical, au moins pendant l'assemblage dudit panneau mobile sur ladite partie fixe.

En effet, il convient de prendre en compte la souplesse du guidage, notamment avant la solidarisation du panneau mobile à des moyens de lève-vitre, venant généralement se fixer à la partie inférieure de ce panneau mobile, ce dernier portant des patins de guidage en partie supérieure. De ce fait, le panneau mobile peut bouger en X (selon la longueur du véhicule) et/ou en Y (selon la largeur du véhicule). Pour maîtriser cela, selon l'invention, on forme une ou deux butées directement dans le surmoulage, également appelé par la suite encapsulation, de façon à fournir des moyens simples et efficaces de guidage et/ou du maintien du panneau mobile pour son montage, et le cas échéant pour une intervention de maintenance.

Selon un mode de réalisation particulier, ladite encapsulation comprend deux butées, s'étendant à proximités desdits rails et/ou dudit cadre.

Notamment, lesdites butées peuvent coopérer avec un logement formé dans ledit cadre, ladite traverse et/ou ladite pièce rapportée sur un rail de guidage.

Cette approche est simple à mettre en œuvre et efficace.

Selon un aspect particulier, ladite portion inférieure de l'encapsulation peut en outre comprendre un élément de liaison avec un mécanisme de lève-vitre.

La solidarisation au lève-vitre est ainsi facilitée, et ne nécessite pas d'éléments rapportés particulier.

Notamment, ledit élément de liaison peut présenter au moins une lumière permettant la solidarisation avec ledit mécanisme de lève-vitre. Cette lumière porte avantageusement une pièce souple de rattrapage de jeu.

Selon un autre aspect particulier, ladite portion inférieure de ladite encapsulation peut se prolonger par deux portions latérales portant chacune au moins un patin apte à coulisser dans l'un desdits rails, ou un support de patin recevant ledit patin.

A nouveau, ceci permet de simplifier la fabrication et le montage du dispositif, l'encapsulation étant réalisée en une seule opération et assurant plusieurs fonctions distinctes.

Selon un mode de réalisation particulier, ces patins présentent une section sensiblement en C, une première extrémité dudit patin étant prise dans ladite portion latérale de ladite encapsulation et une seconde extrémité dudit patin, portant un élément de guidage dans ledit rail, s'étendant sensiblement au-dessus de ladite première extrémité.

Cette section en C permet de réduire l'encombrement global du patin.

Selon un autre mode de réalisation particulier, ces patins présentent une section sensiblement en S, une première extrémité dudit patin étant prise dans ladite portion latérale de ladite encapsulation et une seconde extrémité dudit patin, portant un élément de guidage dans ledit rail, s'étendant au-delà du bord dudit panneau mobile et au-dessus du bord correspondant de la partie fixe.

Cette approche, combinée à un rail adapté, permet également un encombrement réduit, et donc un clair de baie optimisé.

Selon un autre aspect particulier, ladite encapsulation présente, en section, sur au moins un de ces bords, une extension s'étendant vers l'extérieur dudit panneau mobile et vers l'intérieur du véhicule.

Ceci permet, le cas échéant en combinaison avec d'autres éléments tels qu'un joint d'étanchéité, d'optimiser la gestion de l'étanchéité et de l'évacuation de l'eau.

Selon un autre aspect particulier, ladite encapsulation présente une portion supérieure, reliant lesdites portions latérales, de façon à s'étendre sur toute la périphérie dudit panneau mobile.

Les différents aspects particuliers décrits ci-dessus peuvent bien sûr être combinés, en tout ou en partie, pour optimiser l'utilisation de l'encapsulation.

L'invention concerne également un véhicule automobile comprenant au moins un dispositif vitré tel que décrit ci-dessus.

Notamment, dans un tel véhicule, ledit dispositif d'obturation peut être monté en partie supérieure d'une porte dudit véhicule, ledit panneau mobile se déplaçant au moins partiellement dans une partie inférieure de ladite porte.

### 5. Liste des figures

L'invention, ainsi que les différents avantages qu'elle présente, seront plus facilement compris grâce à la description qui va suivre, donnée à titre simplement illustratif et non limitatif en référence aux figures annexées, parmi lesquelles :
- la figure 1 et la figure 2 sont des vues en perspectives schématique d'un mode de réalisation d'un dispositif vitré de porte de véhicule selon l'invention, respectivement vu du côté orienté vers l'extérieur et l'intérieur du véhicule ;
- la figure 3 est une vue éclatée des principaux éléments constituant le dispositif des figures 1 et 2 ;
- la figure 4 est une vue schématique du dispositif des figures 1 et 2, faisant apparaître l'emplacement de la section de la figure 5 ;
- la figure 5 est une section du cadre et du rail du dispositif de la figure 4, selon un premier mode de réalisation ;
- la figure 6 est une vue simplifiée du dispositif des figures 1 et 2, vu de l'intérieur, faisant apparaître l'emplacement de la section de la figure 7 ;
- la figure 7 est une section de la partie supérieure du cadre du dispositif de la figure 6, selon le premier mode de réalisation ;
- la figure 8 est une section du cadre et du rail du dispositif de la figure 4, selon un deuxième mode de réalisation ;
- la figure 9 est une section de la partie supérieure du cadre du dispositif de la figure 6, selon le deuxième mode de réalisation ;
- la figure 10 est une autre vue du dispositif des figures 1 et 2, illustrant les possibles déplacements intempestifs du panneau mobile, notamment lors de son montage ;
- la figure 11 est une autre vue du dispositif de la figure 10, faisant apparaître l'emplacement des butées selon l'invention ;
- la figure 12 est une vue agrandie de l'une des butées du dispositif de la figure 11, faisant apparaître l'axe A de la section de la figure 13 ;
- la figure 13 illustre la section selon l'axe A de la figure 12 ;
- la figure 14 illustre la section selon l'axe B de la figure 13 ;
- la figure 15 illustre le panneau mobile du dispositif de la figure 11 ;
- la figure 16 présente une variante du panneau mobile de la figure 15, dans laquelle l'encapsulation comprend des moyens de liaison avec un lève-vitre ;
- la figure 17 présente une variante du panneau mobile de la figure 15, dans laquelle l'encapsulation comprend des patins de guidage ;
- la figure 18 présente une variante du panneau mobile de la figure 15, dans laquelle l'encapsulation comprend une portion supérieure.

### 6. Description détaillée d'un mode de réalisation de l'invention

### 6.1 structure générale

L'invention concerne donc une nouvelle technique de la fabrication et/ou de la maintenance d'un dispositif vitré d'une porte (porte latérale, porte arrière, hayon, porte de cabine...), voire d'une partie fixe de la carrosserie de véhicule automobile. La vitre, ou panneau mobile, est alignée et affleurante avec au moins un bord de la carrosserie, c'est-à-dire qu'aucun cadre ou élément de cadre ne fait saillie vers l'extérieur du véhicule, par rapport au plan de cette partie vitrée, et est guidée de façon à pénétrer dans le caisson de porte (ou un élément équivalent de carrosserie), selon une direction verticale.

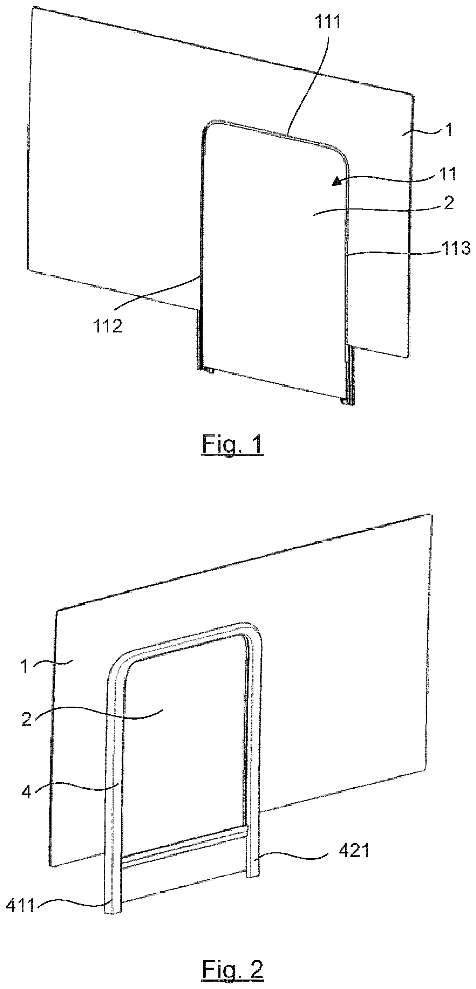

Les figures 1 et 2 illustrent schématiquement un tel dispositif, vu côté correspondant à l'extérieur, respectivement à l'intérieur, du véhicule. Ce dispositif est destiné à être solidarisé, via la partie fixe, à un caisson de porte ou à la carrosserie du véhicule, non représenté, s'étendant sous le dispositif.

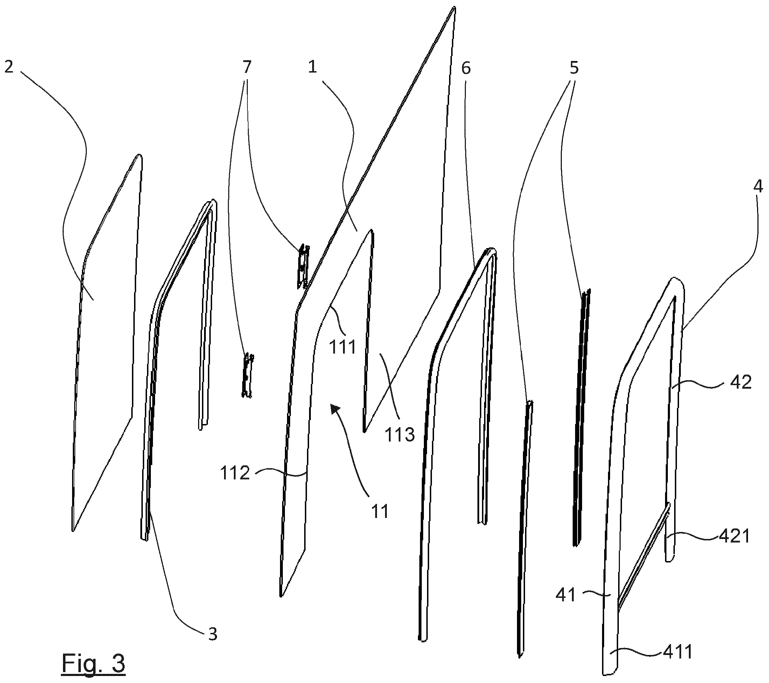

Les principaux éléments constitutifs du dispositif apparaissent sur la vue éclatée de la figure 3. Le dispositif comprend ainsi une partie fixe 1, qui peut notamment être une vitre d'un seul tenant dont les bords extérieurs correspondent aux bords la partie supérieure de la porte. Une ouverture 11 est découpée dans cette partie fixe, définie par un bord supérieur 111 et deux bords latéraux verticaux 112 et 113 de la partie fixe. La partie inférieure de l'ouverture n'est pas délimitée dans la partie fixe mais formée dans son bord inférieur, pour permettre le déplacement du panneau mobile 2.

Ce panneau mobile 2, qui peut également être vitré, est donc conçu et dimensionné pour venir s'inscrire dans l'ouverture 11, dans une position fermée, et pour se décaler vers le bas, typiquement à l'intérieur du caisson de porte, dans une position ouverte. Ce déplacement peut par exemple être assuré par un moteur électrique et une transmission adaptée (non représentés) reliant la partie basse du panneau mobile 2 au moteur.

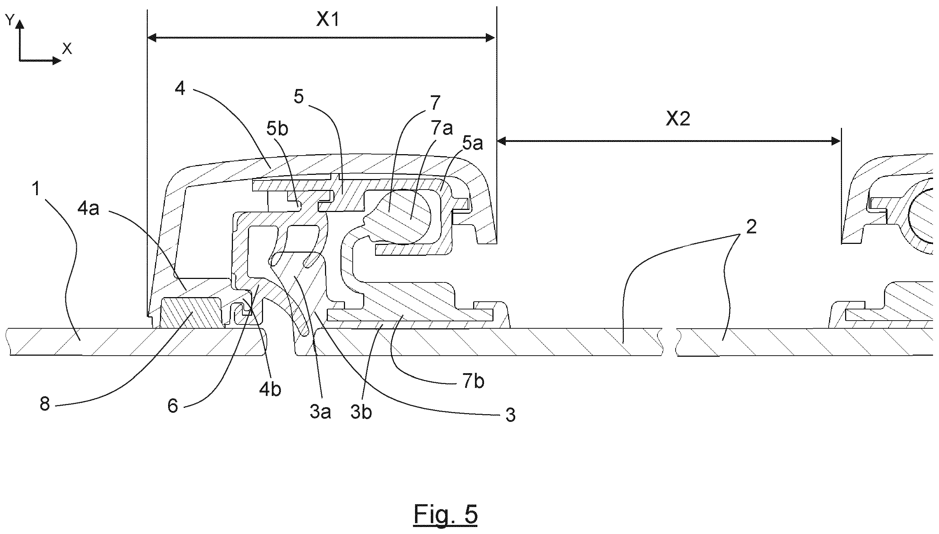

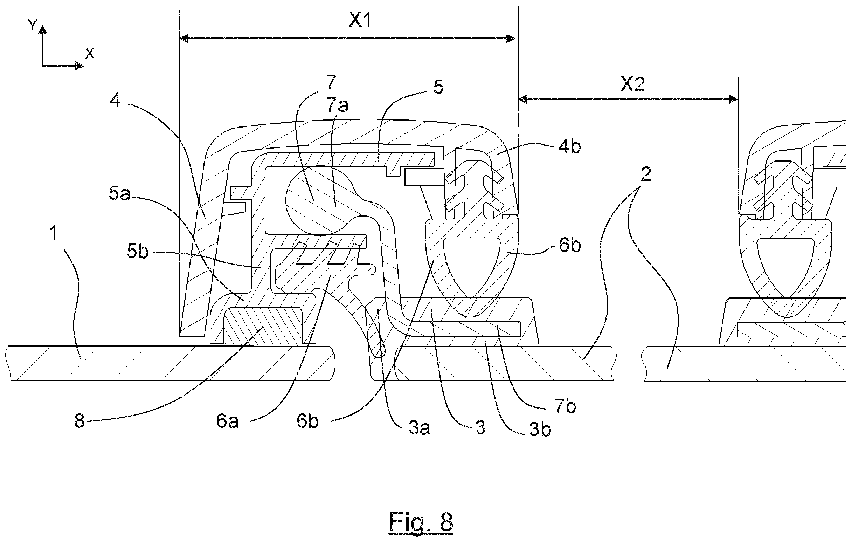

Le panneau mobile 2 reçoit une encapsulation 3, s'étendant sur un ou plusieurs bords du panneau mobile, comme illustré par la suite selon différents modes de réalisation. Cette encapsulation 3 peut notamment s'étendre sur le chant du panneau mobile et sur la périphérie de celui-ci, sur la face orientée vers l'intérieur du véhicule, sur quelques millimètres ou centimètres, comme illustré sur les figures 5 et 8 commentées par la suite.

La partie fixe 1 porte un cadre 4, sur sa face orientée vers l'intérieur du véhicule, au moins le long du bord supérieur 111 et des bords latéraux verticaux 112 et 113. Les portions latérales 41, 42 du cadre portent et/ou sont portées par des rails 5, permettant le maintien et le guidage du panneau mobile 2. Comme ceci apparaît notamment sur la figure 2, le cadre et/ou les rails se prolongent au-dessous de la partie fixe 1 (parties 411 et 421).

Un joint d'étanchéité 6 est monté dans le cadre 4, le long de ses portions latérales et supérieure.

Le panneau mobile 2 est équipé de patins de guidage 7, aptes à coopérer avec les rails 5. Ils peuvent notamment être solidarisés directement à l'encapsulation, ou via un support intermédiaire.

Le cadre et les rails sont solidarisés à la partie fixe par un cordon de colle principal, référencé 8 sur les figures 5 et 8.

### 6.3 assemblage rail et cadre - première approche

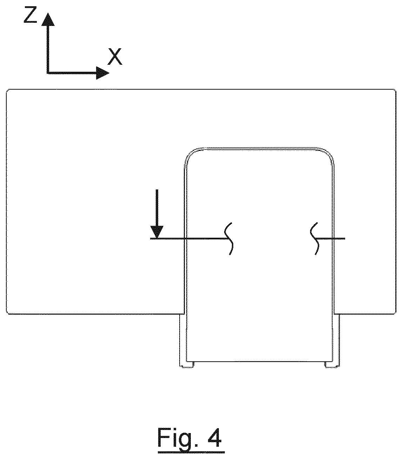

La figure 4 est une vue simplifiée du dispositif, précisant l'emplacement de la section de la figure 5. Sur cette figure 5, on présente un premier exemple de conception du cadre, des rails et des patins.

Selon cette approche, le cadre 4 est collé à la partie fixe 1, via un cordon de colle 8 se logeant dans le logement 4a prévu à cet effet. Le cadre 4 porte un rail de guidage 5, dont une portion 5a de guidage est apte à coopérer avec une portion 7a essentiellement sphérique du patin 7.

Le joint d'étanchéité 6, qui présente trois lèvres est solidarisé d'une part au cadre 4, via la portion d'accrochage 4b, et d'autre part au rail 5, via la portion d'accrochage 5b.

Le panneau mobile 2 porte une encapsulation 3, dont une portion 3a s'étend vers l'intérieur du véhicule en s'éloignant du panneau mobile, et forme une surface latérale et une surface supérieure coopérant avec les lèvres du joint d'étanchéité. Cette portion 3a recouvre également le chant du panneau mobile.

Une portion 3b s'étend sur la périphérie du panneau mobile 5, sur sa face orientée vers l'intérieur du véhicule, et reçoit une extrémité 7b du patin 7, de façon à le maintenir.

Dans ce mode de réalisation, le patin présente une section en forme générale de C. Il est en quelque sorte replié sur lui-même, les deux extrémités 7a et 7b étant sensiblement superposées, l'une au-dessus de l'autre (selon un axe perpendiculaire au plan défini par le panneau mobile). Ceci permet de réduire la largeur X1 du cadre et donc de bénéficier d'un clair de baie (X2) important.

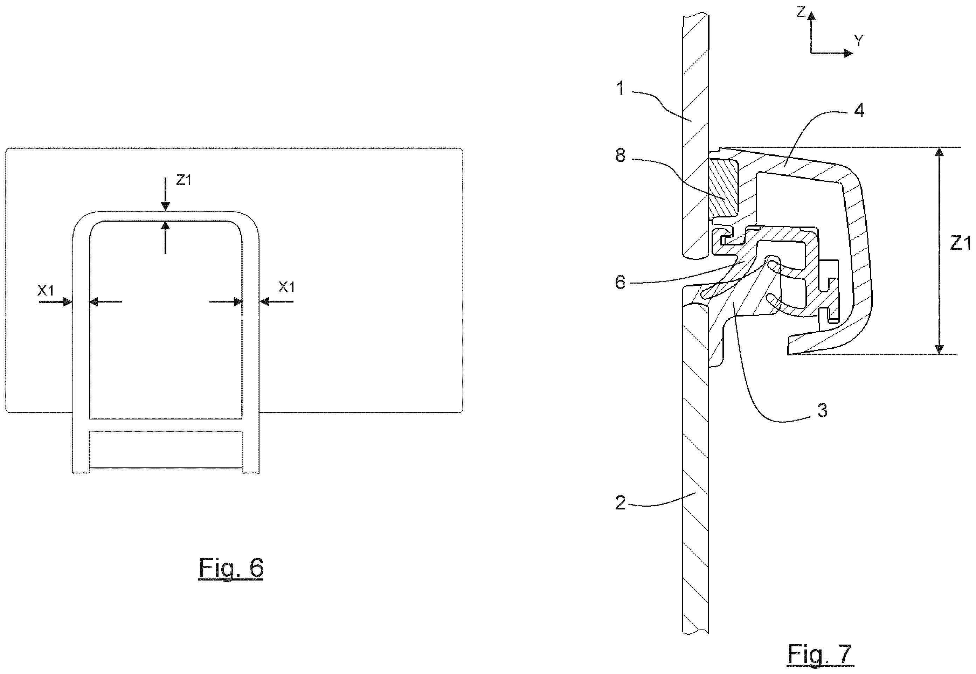

Dans le même objectif, et comme illustré par la figure 6, il est possible que le cadre soit moins large (Z1) en partie supérieure, qui ne contient pas de rail. Selon la section de la figure 7, on constate ainsi que la largeur de l'encapsulation 3 est réduite, de même que celle du cadre 4, qui maintient le joint d'étanchéité 6 par ses deux côtés.

Selon ce mode de réalisation, le cadre est collé à la partie fixe sur toute sa périphérie.

### 6.4 assemblage rail et cadre - deuxième approche

Il est cependant souhaitable de réduire encore la largeur du cadre. L'approche illustrée par la figure 8 (section à l'emplacement défini sur la figure 4) permet d'atteindre cet objectif.

Le panneau mobile 2 porte une encapsulation 3, dont une portion 3a s'étend vers la partie fixe en s'éloignant du panneau mobile, et forme une surface latérale coopérant avec une lèvre d'un premier joint d'étanchéité 6a. Cette portion 3a recouvre également le chant du panneau mobile.

Une portion 3b de l'encapsulation s'étend sur la périphérie du panneau mobile sur sa face orientée vers l'intérieur du véhicule, et reçoit une extrémité 7b du patin 7, de façon à le maintenir.

Dans cette mise en œuvre, le patin présente une section de forme générale en S, l'extrémité de guidage 7a, de forme essentiellement cylindrique, étant décalé au-delà du panneau mobile 2, au moins en partie au-dessus de la partie fixe 1. D'autres sections sont cependant envisageables dans ce mode de réalisation, y inclus la section en C.

Selon cette deuxième approche, le rail 5 est collé, via sa partie 5a formant logement de réception du cordon de colle 8, à la partie fixe. Ce rail 5 porte le cadre 4, par exemple par emboîtement, pour les portions latérales du cadre. Il porte également le joint d'étanchéité 6a, via un logement 5b. Ceci permet de réduire efficacement la largeur globale du cadre, et donc d'optimiser le clair de baie.

L'extrémité 4b du cadre orientée vers l'ouverture porte un deuxième joint d'étanchéité 6b, venant en contact avec la partie supérieure de l'encapsulation 3.

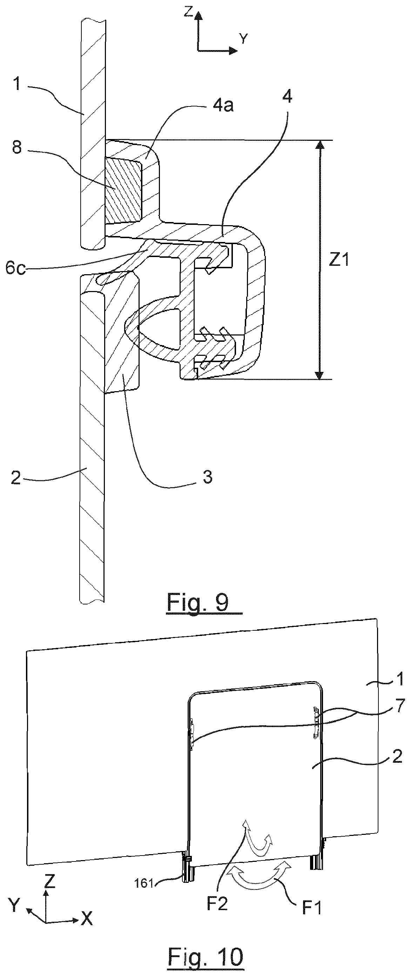

La figure 9 illustre la section de la portion supérieure du cadre, selon ce second mode de réalisation. Du fait qu'il n'y a bien sûr pas de rail sur cette portion supérieure, le cadre 4 est collé directement à la partie fixe 1, via le cordon de colle 8 placé dans le logement 4a. Un seul joint d'étanchéité 6c, de section sensiblement différente de celle du joint 6b, est porté par le cadre.

Ainsi, sur les parties latérales, ce sont les rails 5 qui sont collés à la partie fixe, alors que c'est le cadre 4 qui est collé à la partie fixe dans sa partie supérieure, par le même cordon de colle 8, circulant dans les logements 5a, 4b respectivement.

### 6.5 blocage de la partie basse du panneau mobile

Le panneau mobile 2 étant guidé par deux patins 7 qui sont situés sur sa partie haute, sa partie basse peut être soumise, comme illustré sur la figure 10, à des déplacements intempestifs selon les axes X (flèche F1) et Y (flèche F2), du fait de la souplesse du guidage, en particulier lors du montage, avant la fixation du mécanisme de lève-vitre.

Pour éviter, ou à tout le moins réduire, ces déplacements intempestifs en X et en Y, il peut être prévu une ou deux butées.

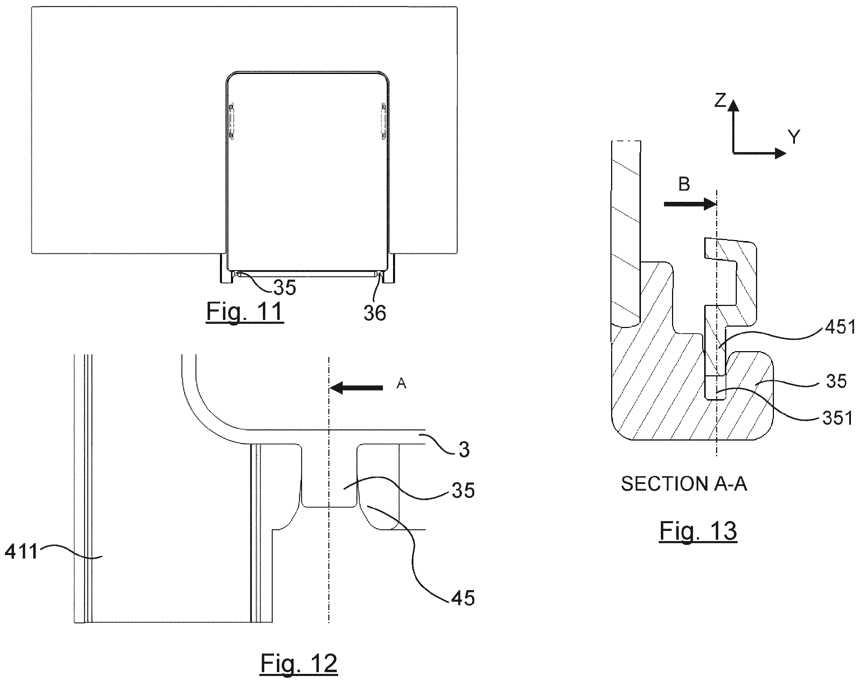

Comme illustré sur les figures 11 à 14, l'encapsulation du panneau mobile 3 intègre directement une ou deux butées 35, 36, coopérant avec les rails et/ou le cadre.

La figure 11 présente une vue générale du dispositif, dont la partie portant la butée 35 est agrandie sur la figure 12. L'encapsulation 3 du panneau mobile présente une butée 35, coopérant avec un élément complémentaire 45 solidaire de la partie fixe, et notamment de la portion inférieure 411 du cadre, d'une traverse centrale reliant les deux parties latérales du cadre ou d'une pièce rapportée sur le rail ou sur le cadre.

Comme on le voit sur la section A-A de la figure 13, le blocage du panneau mobile suivant l'axe Y est assuré par la rainure 351 formée dans la butée 35, coopérant avec une portion 451 de la partie fixe, pénétrant dans la rainure.

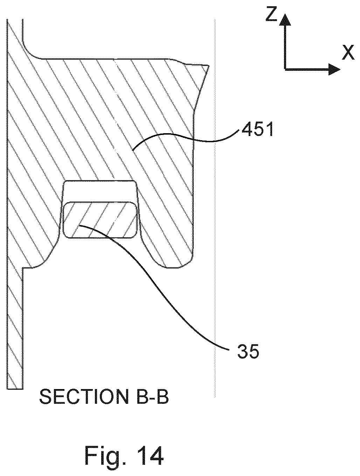

Le blocage du panneau mobile suivant l'axe X est illustré par la section B-B de la figure 14. La butée 35 formée dans l'encapsulation est maintenue dans la partie fixe 451.

### 6.6 liaison avec le lève-vitre

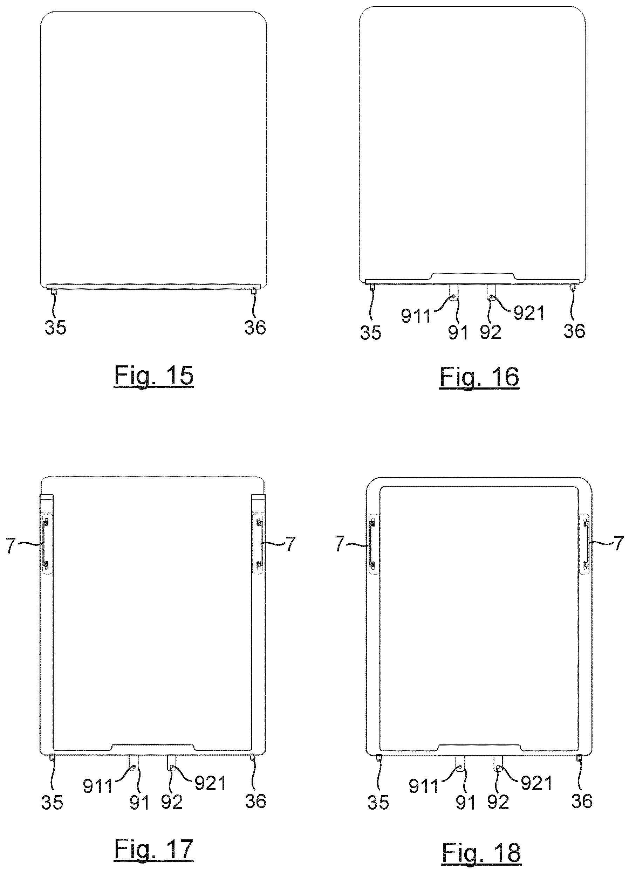

La figure 15 illustre le panneau mobile, avec deux butées 35, 36.

Comme illustré sur la figure 16, l'encapsulation de la partie basse peut en outre intégrer des moyens de liaison 91, 92 avec un lève-vitre (non représenté). Ici, ces moyens de liaison comprennent deux projections, portant chacune une lumière 911, 921. Bien sûr, il peut également s'agir d'un unique élément, présentant deux lumières.

Ces lumières 911, 921 permettent une solidarisation, par exemple par vissage, au lève-vitre. Pour contrecarrer les jeux de montage éventuels, les lumières peuvent recevoir une pièce intermédiaire souple.

### 6.7 encapsulation des patins

Comme illustré sur la figure 17, l'encapsulation peut également s'étendre sur les bords latéraux du panneau mobile. Dans ce cas, l'encapsulation peut porter les patins 7 qui coulissent dans les rails 5, ou des supports de patins, aptes à recevoir les patins eux-mêmes.

La figure 8, déjà commentée, présente un exemple de section au niveau d'un bord latéral du dispositif.

### 6.8 encapsulation de toute la périphérie du panneau mobile

Outre la partie inférieure les parties latérales, l'encapsulation peut également s'étendre le long de la partie supérieure du panneau mobile, comme illustré sur la figure 18. Dans ce cas, l'encapsulation peut s'étendre sur toute la périphérie du panneau mobile, le cas échéant en intégrant tout ou partie des fonctions précédemment décrite.

La figure 9, déjà commenté, est un exemple de section du dispositif le long de ce bord supérieur. La largeur de l'encapsulation 3 peut être réduite, par rapport aux bords latéraux (figure 8) de même que celle du cadre 4, qui maintient le joint d'étanchéité 6 par ses deux côtés, ce qui permet d'améliorer le clair de baie.

## Revendications

1. Dispositif vitré destiné à être assemblé à un caisson de porte pour former une porte de véhicule ou à un élément de carrosserie, comprenant une partie fixe (1) vitrée et un panneau vitré mobile (2) en coulissement par rapport à ladite partie fixe selon un axe sensiblement vertical, pouvant sélectivement obturer ou libérer, au moins partiellement, une ouverture (11) ménagée dans ladite partie fixe, ledit panneau mobile étant guidé le long de rails (5) portés par ladite partie fixe, ledit panneau mobile (2) portant un surmoulage (3) obtenu par encapsulation, recouvrant le chant dudit panneau mobile et s'étendant sur au moins un bord de la surface dudit panneau mobile orientée vers l'intérieur dudit véhicule, et dont une portion inférieure s'étend sur le bord inférieur dudit panneau mobile, **caractérisé en ce que** la portion inférieure dudit surmoulage présente au moins une butée (35, 36) apte à coopérer avec un cadre (4, 45), une traverse centrale et/ou une pièce rapportée sur un rail de guidage porté par ladite partie fixe, la ou lesdites butées (35, 36) assurant une limitation du déplacement dudit panneau mobile (2) par rapport à ladite partie fixe (1) selon deux directions sensiblement perpendiculaires audit axe sensiblement vertical, au moins pendant l'assemblage dudit panneau mobile sur ladite partie fixe.

2. Dispositif vitré selon la revendication 1, **caractérisé en ce que** ladite encapsulation comprend deux butées (35, 36), s'étendant à proximités desdits rails et/ou dudit cadre.

3. Dispositif vitré selon la revendication 2, **caractérisé en ce que** lesdites butées coopèrent avec un logement formé dans ledit cadre, ladite traverse et/ou ladite pièce rapportée sur un rail de guidage.

4. Dispositif vitré selon la revendication 1, **caractérisé en ce que** ladite portion inférieure de l'encapsulation comprend un élément de liaison (91, 92) avec un mécanisme de lève-vitre.

5. Dispositif vitré selon la revendication 4, **caractérisé en ce que** ledit élément de liaison (91, 92) présente au moins une lumière (911, 921) permettant la solidarisation avec ledit mécanisme de lève-vitre, et portant une pièce souple de rattrapage de jeu.

6. Dispositif vitré selon la revendication 1, **caractérisé en ce que** ladite portion inférieure de ladite encapsulation se prolonge par deux portions latérales portant chacune au moins un patin (7) apte à coulisser dans l'un desdits rails, ou un support de patin recevant ledit patin.

7. Dispositif vitré selon la revendication 6, **caractérisé en ce que** lesdits patins présentent une section sensiblement en C, une première extrémité (7b) dudit patin étant prise dans ladite portion latérale de ladite encapsulation et une seconde extrémité dudit patin, portant un élément de guidage (7a) dans ledit rail (5), s'étendant sensiblement au-dessus de ladite première extrémité.

8. Dispositif vitré selon la revendication 6, **caractérisé en ce que** lesdits patins (7) présentent une section sensiblement en S, une première extrémité (7b) dudit patin étant prise dans ladite portion latérale de ladite encapsulation (3) et une seconde extrémité (7a) dudit patin, portant un élément de guidage dans ledit rail (5), s'étendant au-delà du bord dudit panneau mobile (2) et au-dessus du bord correspondant de la partie fixe (1).

9. Dispositif vitré selon la revendication 1, **caractérisé en ce que** ladite encapsulation présente en section, sur au moins un de ces bords, une extension s'étendant vers l'extérieur dudit panneau mobile et vers l'intérieur du véhicule.

10. Dispositif vitré selon la revendication 1, **caractérisé en ce que** ladite encapsulation présente une portion supérieure, reliant lesdites portions latérales, de façon à s'étendre sur toute la périphérie dudit panneau mobile.

11. Véhicule automobile **caractérisé en ce qu'**il comprend au moins un dispositif vitré selon l'une quelconque des revendications 1 à 10.

12. Véhicule selon la revendication 11, **caractérisé en ce que** ledit dispositif vitré est monté en partie supérieure d'une porte dudit véhicule, ledit panneau mobile se déplaçant au moins partiellement dans une partie inférieure de ladite porte.

## Patentansprüche

1. Glasvorrichtung, die dazu bestimmt ist, an einem Türkasten montiert zu werden, um eine Fahrzeugtür oder ein Karosserieelement zu bilden, umfassend einen festen Glasteil (1) und eine bewegliche Glasscheibe (2), die in Bezug auf den festen Teil entlang einer im Wesentlichen vertikalen Achse verschiebbar ist und mindestens teilweise eine Öffnung (11) in dem festen Teil selektiv verschließen oder freigeben kann, wobei die bewegliche Scheibe entlang von Schienen (5) geführt wird, die von dem festen Teil getragen werden, wobei die bewegliche Scheibe (2) eine durch Kapselung erhaltene Umspritzung (3) aufweist, die den Rand der beweglichen Scheibe bedeckt und sich über mindestens einen Rand der Oberfläche der beweglichen Scheibe erstreckt, die zu dem Inneren des Fahrzeugs ausgerichtet ist, und deren unterer Abschnitt sich über den unteren Rand der beweglichen Scheibe erstreckt, **dadurch gekennzeichnet, dass** der untere Abschnitt der Umspritzung mindestens einen Anschlag (35, 36) aufweist, der mit einem Rahmen (4, 45), einem zentralen Querträger und/oder einem Anbauteil an einer Führungsschiene, die von dem festen Teil getragen wird, zusammenwirken kann, wobei der oder die Anschläge (35, 36) eine Begrenzung der Bewegung der beweglichen Scheibe (2) in Bezug auf den festen Teil (1) in zwei Richtungen gewährleisten, die im Wesentlichen senkrecht zu der im Wesentlichen vertikalen Achse verlaufen, mindestens während der Montage der beweglichen Scheibe an dem festen Teil.

2. Glasvorrichtung nach Anspruch 1, **dadurch gekennzeichnet, dass** die Kapselung zwei Anschläge (35, 36) umfasst, die sich in der Nähe der Schienen und/oder des Rahmens erstrecken.

3. Glasvorrichtung nach Anspruch 2, **dadurch gekennzeichnet, dass** die Anschläge mit einer in dem Rahmen, dem Querträger und/oder dem Anbauteil an einer Führungsschiene ausgebildeten Aufnahme zusammenwirken.

4. Glasvorrichtung nach Anspruch 1, **dadurch gekennzeichnet, dass** der untere Abschnitt der Kapselung ein Verbindungselement (91, 92) mit einem Fensterhebermechanismus umfasst.

5. Glasvorrichtung nach Anspruch 4, **dadurch gekennzeichnet, dass** das Verbindungselement (91, 92) mindestens ein Lumen (911, 921) aufweist, das die feste Verbindung mit dem Fensterhebermechanismus ermöglicht und ein flexibles Spielausgleichsteil trägt.

6. Glasvorrichtung nach Anspruch 1, **dadurch gekennzeichnet, dass** sich der untere Abschnitt der Kapselung durch zwei seitliche Abschnitte fortsetzt, die jeweils mindestens einen Gleiter (7) tragen, der in einer der Schienen gleiten kann, oder einen Gleiterhalter, der den Gleiter aufnimmt.

7. Glasvorrichtung nach Anspruch 6, **dadurch gekennzeichnet, dass** die Gleiter (7) einen im Wesentlichen C-förmigen Querschnitt aufweisen, wobei ein erstes Ende (7b) des Gleiters in den seitlichen Abschnitt der Kapselung eingefasst ist und ein zweites Ende des Gleiters ein Führungselement (7a) in der Schiene (5) trägt, das sich im Wesentlichen über das erste Ende erstreckt.

8. Glasvorrichtung nach Anspruch 6, **dadurch gekennzeichnet, dass** die Gleiter (7) einen im Wesentlichen S-förmigen Querschnitt aufweisen, wobei ein erstes Ende (7b) des Gleiters in den seitlichen Abschnitt der Kapselung (3) eingefasst ist und ein zweites Ende (7a) des Gleiters ein Führungselement in der Schiene (5) trägt, das sich über den Rand der beweglichen Scheibe (2) und über den entsprechenden Rand des festen Teils (1) hinaus erstreckt.

9. Glasvorrichtung nach Anspruch 1, **dadurch gekennzeichnet, dass** die Kapselung in dem Querschnitt an mindestens einer dieser Ränder eine Verlängerung aufweist, die sich nach außen von der beweglichen Scheibe und nach innen in das Fahrzeug hinein erstreckt.

10. Glasvorrichtung nach Anspruch 1, **dadurch gekennzeichnet, dass** die Kapselung einen oberen Abschnitt aufweist, der die seitlichen Abschnitte verbindet, so dass er sich über den gesamten Umfang der beweglichen Scheibe erstreckt.

11. Kraftfahrzeug, **dadurch gekennzeichnet, dass** es mindestens eine Glasvorrichtung nach einem der Ansprüche 1 bis 10 umfasst.

12. Fahrzeug nach Anspruch 11, **dadurch gekennzeichnet, dass** die Glasvorrichtung in dem oberen Teil einer Tür des Fahrzeugs montiert ist, wobei sich die bewegliche Scheibe mindestens teilweise in einem unteren Teil der Tür bewegt.

## Claims

1. Glazed device intended to be mounted on an inner door shell to form a vehicle door or on a bodywork element, comprising a glazed fixed part (1) and a mobile glazed panel (2) that can slide relative to the glazed fixed part along a substantially vertical axis, and can selectively at least partially cover or uncover an opening (11) in the glazed fixed part, the mobile glazed panel being guided along rails (5) supported by the glazed fixed part,
wherein the mobile glazed panel (2) supports an overmoulding (3), which is obtained by encapsulation, covering a rim of the mobile glazed panel and extends over at least one edge of a surface of the mobile glazed panel oriented towards the inside of the vehicle, and of which a lower portion extends on a lower edge of the mobile glazed panel, **characterised in that** the lower portion of said overmoulding has at least one stop (35, 36) capable of cooperating with a frame (4, 45), a central crosspiece and/or an attachment part on one of the rails supported by the glazed fixed part,
said at least one stop (35, 36) ensuring that movement of the mobile glazed panel (2) is limited relative to the fixed part (1) in two directions substantially perpendicular to the substantially vertical axis, at least while said mobile panel is mounted on the glazed fixed part.

2. Glazed device according to claim 1, wherein said encapsulation comprises two stops (35, 36), which extend close to the rails and/or the frame.

3. Glazed device according to claim 2, wherein said stops cooperate with a recess formed in the frame, said crosspiece and/or said attachment part on a guide rail.

4. Glazed device according to claim 1, wherein said lower portion of the encapsulation comprises an element (91, 92) for connecting with a window lifting mechanism.

5. Glazed device according to claim 4, wherein said connecting element (91, 92) has at least one hole (911, 921) for securing it with said window lifting mechanism, and supporting a flexible adjustment part.

6. Glazed device according to claim 1, wherein said lower portion of said encapsulation extends by two side portions each supporting at least one pad (7) capable of sliding in one of said rails, or a pad support receiving said pad.

7. Glazed device according to claim 6, wherein said pads (7) have a substantially C-shaped section, a first end (7b) of said pad being engaged in said side portion of said encapsulation and a second end (7a) of said pad, supporting a guide element (7a) in said rail (5), which extends substantially above said first end.

8. Glazed device according to claim 6, wherein the pads have a substantially S-shaped section, a first end (7b) of said pad being engaged in said side portion of said encapsulation (3) and a second end (7a) of said pad, supporting a guide element in said rail (5), which extends beyond an edge of said mobile panel (2) and above a corresponding edge of said glazed fixed part (1).

9. Glazed device according to claim 1, wherein said encapsulation has, sectionally, on at least one of its edges, an extension which extends towards the outside of said mobile glazed panel and towards the inside of the vehicle.

10. Glazed device according to claim 1, wherein said encapsulation has an upper portion, connecting said side portions, so as to extend around the entire periphery of said mobile glazed panel.

11. Motor vehicle **characterised in that** it comprises at least one glazed device according to any one of claims 1 to 10.

12. Vehicle according to claim 11, **characterised in that** said glazed device is mounted in an upper part of a door of said vehicle, the mobile panel moving at least partially in a lower part of said door.
